# EUROPEAN PATENT APPLICATION

(11) **EP 1 248 382 A1**
(43) Date of publication of application: **09.10.2002**
(21) Application number: 02006700.5
(22) Date of filing: 27.03.2002
(51) Int. Cl.: H04B 1/707

(54) **Synchronization tracking apparatus and radio communication terminal**

(30) Priority: 28.03.2001 JP 2001093865
(71) Applicant: Kabushiki Kaisha Toshiba, Tokyo (JP)
(72) Inventor: Mimura, Masahiko, Minato-ku, Tokyo 105-8001 (JP)
(74) Representative: HOFFMANN - EITLE

(57) **Abstract**

A first correlator (11) estimates a channel at a time of demodulation of a received signal by using a first spreading code outputted from the spreading code generator (14). A second correlator (17) carries out despreading by using a second spreading code which is outputted from the spreading code generator (14) and which has a phase earlier than the first spreading code by a constant amount. A third correlator (16) carries out despreading by using a third spreading code which is outputted from the spreading code generator (14) and which has a phase later than the first spreading code by a constant amount. A subtracter (18) calculates a difference value between a correlation value outputted from the second correlator (17) and a correlation value outputted from the third correlator (16). A normalizing circuit (19) normalizes the difference value from the subtracter (18) on the basis of a correlation value outputted from the first correlator (11).

## Description

The present invention relates to a synchronization tracking apparatus and a radio communication terminal.

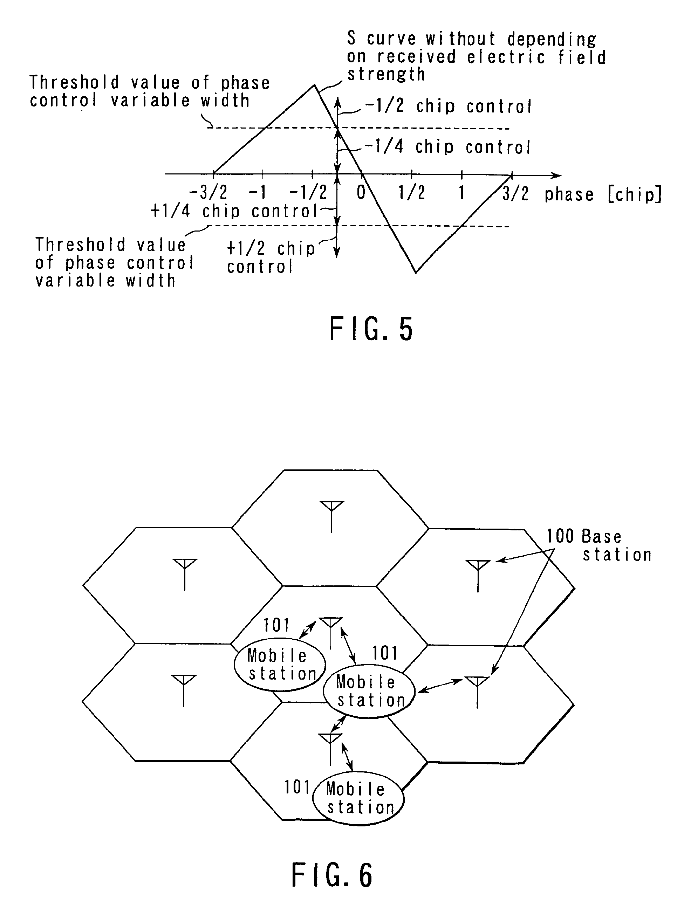

As shown in FIG. 6, in a mobile communication system in which a plurality of base stations 100 are disposed and a service area (cell) is formed for each base station 100 and which forms a radio path between the base station 100 and a mobile station 101 in each service area and carries out radio communication, notice has been given to a CDMA system having many advantages, such as it is strong against multi-pass interference and jamming, the capacity of the system is large, speech communication quality is good, and the like.

A radio communication system using a CDMA system carries out, in a transmitting side device, modulation with respect to digitized voice data and image data by a digital modulation method such as a QPSK modulation method or the like, and thereafter, converts the modulated transmission data to a broadband base band signal by using a spreading code such as a pseudo noise code (PN code) or the like, and converts the signal to a radio frequency signal and transmits it.

On the other hand, a receiving side apparatus is configured so as to carry out despreading with respect to the received radio frequency signal by using the same code as the spreading code used in the transmitting side apparatus, and thereafter, carry out digital demodulation by a digital demodulation method such as a QPSK demodulation method or the like, and playback the received data.

It is always necessary to synchronize the spreading codes in order to demodulate information, and this processing is carried out each time receiving is intermittently carried out at the time of starting-up of the power source or at the time of hand-off. During speech communication as well, in order to carry out high quality demodulation, multi-pass which comes via a plurality of paths is always searched for by carrying out code synchronizing processing. In a CDMA system, by tuning and combining the phases of multi-pass which come at independent timings, the speech communication quality can be improved. This is called RAKE combining. At the time of demodulation, the processing of carrying out demodulation is in charge at the finger, and the multi-pass searching is in charge at the searcher. Both of the finger and searcher have a plurality of correlators, and carry out demodulation and searching operations by correlating with the received signal.

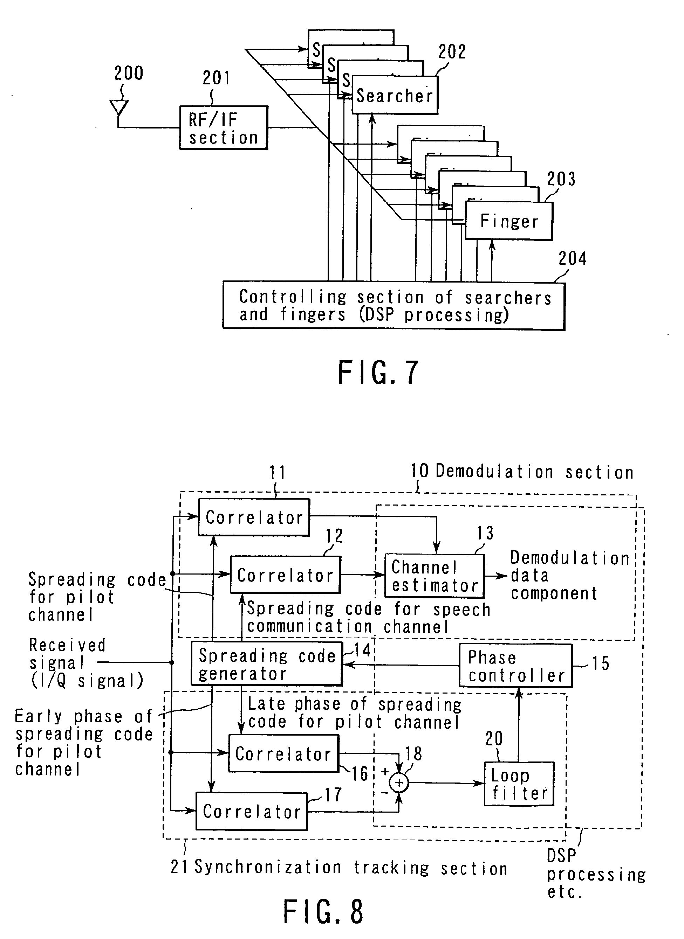

FIG. 7 is a block diagram showing a schematic configuration of a radio communication terminal. A received signal is inputted to the terminal via an antenna 200, and high frequency band processing is carried out on the received signal in an RF/IF section 201, and thereafter, base band processing is carried out on the signal in a searcher 202 and a finger 203. The searcher 202 carries out code synchronizing processing from the time of starting the power source, during the speech communication and also during waiting. Further, because high speed performance is required for the processing, the processing is realized in a plurality of searchers 202.

In the CDMA system, because multi-pass which come independently can be synthesized, the plurality of fingers 203 is provided in accordance with a plurality of multi-passes, thereby RAKE combining is realized. Further, the base band front end of the CDMA system receiving apparatus is configured also by a controlling section 204 which controls the plurality of searchers 202 and fingers 203.

FIG. 8 is a diagram showing a configuration of the finger 203 described in FIG. 7. The finger 203 is mainly structured from a demodulating section 10, a spreading code generator 14, a phase controller 15, and a synchronization tracking section 21.

The demodulating section 10 is formed from a correlator 11 for estimating a channel, a correlator 12 for carrying out demodulation of the speech communication channel, and a channel estimator 13 which estimates a channel. The correlator 11 receives a spreading code for a pilot channel from the spreading code generator 14, and correlates it with a common pilot channel for channel estimation. The correlator 12 receives a spreading code for a speech communication channel from the spreading code generator 14, and correlates it with the speech communication channel. An inverse processing which arises in a channel at the channel estimator 13 is carried out on the outputs of the respective correlators 11 and 12, and the outputs are delivered to an error correction processing section.

On the other hand, the synchronization tracking section 21 has a correlator 16 which receives a spreading code for a pilot channel having a late phase from the spreading code generator 14, and a correlator 17 which receives a spreading code for a pilot channel having an early phase from the spreading code generator 14. By using the correlators 16 and 17 so as to make the correlation at a point shifted by a phase of about ±1/2 chip, a processing of tracking the receiving signal phase is carried out. The channel which is the object is a common pilot channel of an already-known pattern, in the same manner as the above-described correlator 11 for channel estimation.

The early correlation value which is the output from the early correlator 17 and the late correlation value from the late correlator 16 are subtraction-processed in a subtracter 18. The results of subtraction are inputted to a loop filter 20, and a control signal called an S curve is generated by the filtering in the loop filter 20. The phase controller 15 carries out loop control which controls the phase of the spreading code generator 14 on the basis of the control signal.

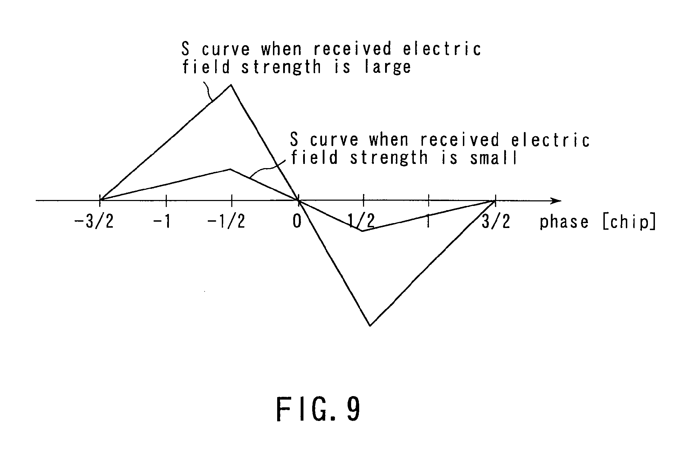

A conventional S curve is shown in FIG. 9. A control signal called an S curve is generated by carrying out subtraction and filtering on the outputs of the respective correlators. The phase controller 15 carries out loop control for controlling the phase of the spreading code generator 14 on the basis of the control signal. The spreading code generator 14 generates spreading codes having phases controlled by the phase controller 15. The spreading code generator 14 generates 4 types of spreading codes. The spreading code for the pilot channel is generated at three types of timings as the spreading code for the common pilot channel.

A phase of a code having no phase shift, which is supplied to the correlator 11 for channel estimation, is an on-time phase. An early phase of the correlator 17 for tracking synchronization and a late phase of the correlator 16 are respectively shifted by a phase of 1/2 chip from the on-time phase. The spreading code generator 14 generates a different spreading code for only the correlator 12 for the speech communication channel, and the timing is the same phase as the on-time phase. The respective spreading codes change interlockingly with each other while maintaining the relative phases.

The outputs of the correlators in the synchronization tracking section 21 are large correlation values when the strength of the received signal is great, and are small correlation values when the strength of the received signal is low. In this way, the phase controlling operation in the synchronization tracking section 21 is affected by the strength of the received signal. Further, because the phase control width is fixed, the tracking ability is limited, and therefore, it is necessary for the phase controlling period is set to be optimally supposing various situations.

Accordingly, an object of the present invention is to provide a synchronization tracking apparatus and a radio communication terminal in which synchronization tracking operation is not affected by the strength of a received signal.

Further, another object of the present invention is to provide a synchronization tracking apparatus and a radio communication terminal in which a phase limiting width is variable and the tracking ability is improved, and which can track in any type of situation.

In order to achieve the above-described objects, according to a first aspect of the present invention, there is provided a synchronization tracking apparatus for a radio communication terminal which carries out radio communication with a base station, comprising:
a spreading code generator which generates a spreading code having a predetermined phase;
a first correlator which estimates a channel at a time of demodulation of a received signal by using a first spreading code outputted from the spreading code generator;
a second correlator which carries out despreading by using a second spreading code which is outputted from the spreading code generator and which has a phase earlier than the first spreading code by a constant amount;
a third correlator which carries out despreading by using a third spreading code which is outputted from the spreading code generator and which has a phase later than the first spreading code by a constant amount;
a subtracter which calculates a difference value between a correlation value outputted from the second correlator and a correlation value outputted from the third correlator; and
a normalizing circuit which normalizes the difference value from the subtracter on the basis of a correlation value outputted from the first correlator.

Further, according to a second aspect of the present invention, there is provided a synchronization tracking apparatus for a radio communication terminal which carries out radio communication with a base station, comprising:
a spreading code generator which generates a spreading code having a predetermined phase;
a first correlator which estimates a channel at a time of demodulation of a received signal by using a first spreading code outputted from the spreading code generator;
a second correlator which carries out despreading by using a second spreading code which is outputted from the spreading code generator and which has a phase earlier than the first spreading code by a constant amount;
a third correlator which carries out despreading by using a third spreading code which is outputted from the spreading code generator and which has a phase later than the first spreading code by a constant amount;
a subtracter which calculates a difference value between a correlation value outputted from the second correlator and a correlation value outputted from the third correlator; and
a phase shift information acquiring section which acquires information relating to a phase shift on the basis of a correlation value outputted from the first correlator and the difference value from the subtracter.

Further, according to a third aspect of the present invention, there is provided a radio communication terminal which carries out radio communication with a base station, comprising:
a spreading code generator which generates a spreading code having a predetermined phase;
a first correlator which estimates a channel at a time of demodulation of a received signal by using a first spreading code outputted from the spreading code generator;
a second correlator which carries out despreading by using a second spreading code which is outputted from the spreading code generator and which has a phase earlier than the first spreading code by a constant amount;
a third correlator which carries out despreading by using a third spreading code which is outputted from the spreading code generator and which has a phase later than the first spreading code by a constant amount;
a subtracter which calculates a difference value between a correlation value outputted from the second correlator and a correlation value outputted from the third correlator; and
a normalizing circuit which normalizes the difference value from the subtracter on the basis of a correlation value outputted from the first correlator.

Further, according to a fourth aspect of the present invention, there is provided a radio communication terminal which carries out radio communication with a base station, comprising:
a spreading code generator which generates a spreading code having a predetermined phase;
a first correlator which estimates a channel at a time of demodulation of a received signal by using a first spreading code outputted from the spreading code generator;
a second correlator which carries out despreading by using a second spreading code which is outputted from the spreading code generator and which has a phase earlier than the first spreading code by a constant amount;
a third correlator which carries out despreading by using a third spreading code which is outputted from the spreading code generator and which has a phase later than the first spreading code by a constant amount;
a subtracter which calculates a difference value between a correlation value outputted from the second correlator and a correlation value outputted from the third correlator; and
a phase shift information acquiring section which acquires information relating to a phase shift on the basis of a correlation value outputted from the first correlator and the difference value from the subtracter.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a configuration of a finger according to an embodiment of the present invention.
FIG. 2 is a diagram showing outputs (early, late, and on-time) of respective correlators in the present invention and a conventional example.
FIG. 3 is a diagram showing another example of the configuration of the finger according to the present embodiment.
FIG. 4 is a diagram showing yet another example of the configuration of the finger according to the present embodiment.
FIG. 5 is a diagram showing an S curve (a curve of a phase control signal) in the present embodiment.
FIG. 6 is a diagram showing a configuration of a conventional cell.
FIG. 7 is a block diagram showing a schematic configuration of a radio communication terminal.
FIG. 8 is a diagram showing a schematic configuration of a conventional finger.
FIG. 9 is a diagram showing a conventional S curve (phase control curve).

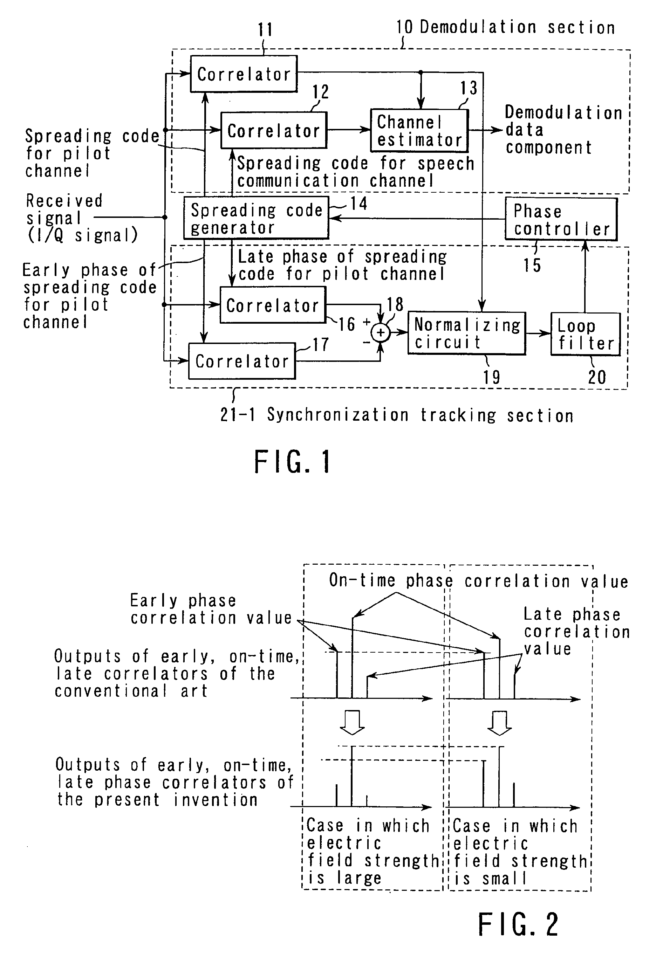

Hereinafter, embodiments of the present invention will be described in detail with reference to the figures. FIG. 1 is a diagram showing a configuration of a finger according to an embodiment of the present invention. The configuration of FIG. 1 has the feature that in addition to the above-described conventional configuration (FIG. 8), a normalizing circuit 19, which normalizes results of subtraction from a subtracter 18 on the basis of an on-time correlation value outputted from a correlator 11 for channel estimation, is provided in a synchronization tracking section 21-1. As the concrete normalizing method in the normalizing circuit 19, dividing the results of subtraction of an early correlation value and a late correlation value by an on-time correlation value may be considered. However, the present invention is not limited to this method.

The output of the normalizing circuit 19 is supplied to a loop filter 20. The loop filter 20 generates a control signal called an S curve by carrying out a predetermined filtering on the supplied output, and transmits the control signal to a phase controller 15. The phase controller 15 carries out loop control which controls the phase of a spreading code generator 14 on the basis of the control signal.

FIG. 2 shows outputs (early, on-time, and late) of respective correlators in the present invention and a conventional example. As shown in FIG. 2, the outputs of the respective conventional correlators are affected by the electric field strength of the received signal. When the electric field strength of the received signal is large, the correlation value is large. Accordingly, the difference between the early correlation value and the late correlation value is large, and as a control signal, it is equivalent to showing that the phase is largely shifted. On the other hand, when the strength of the received signal is small, the control signal is such that the phase is not shifted much.

Whether the phase is early or late can be grasped by the difference between the late correlation value and the early correlation value, but how early or late the phase is cannot be grasped.

With regard to this, in the present embodiment, the difference between the early correlation value and the late correlation value is normalized on the basis of the output from the correlator 11 used for estimating the channel. As shown in FIG. 2, if the differences in the conventional art between the outputs of the early correlator and the late correlator are the same level when the electric field strength is large and small, by carrying out normalizing as described above, a disparity can be found in the magnitude of the difference when the electric field strength is large and small. The normalized difference between the early correlation value and the late correlation value is a value corresponding to the phase shift, and information relating to the phase shift can be obtained. Further, the normalized difference between the early correlation value and the late correlation value does not depend on the strength of the received signal.

FIG. 5 is a diagram showing an S curve (a curve of the phase control signal) in the present embodiment. As shown in FIG. 2, the output from the subtracter 18 does not depend on the strength of the received signal, and the magnitude of the output is varied only by the phase shift. Accordingly, the S curve which is the output of the loop filter 20 has a unique value in accordance with the phase.

Further, as shown in FIG. 5, a threshold value is provided with respect to the value of the control signal which uniquely corresponds to the phase shift, and the phase width may be varied on the basis of the threshold value. FIG. 5 shows that four-stage control is carried out by the phase widths of ±1/2 and ±1/4 [chip] by using two threshold values, and rough phase control, in which the phase width is ±1/2 [chip], is carried out at the portion at which the phase shift is large.

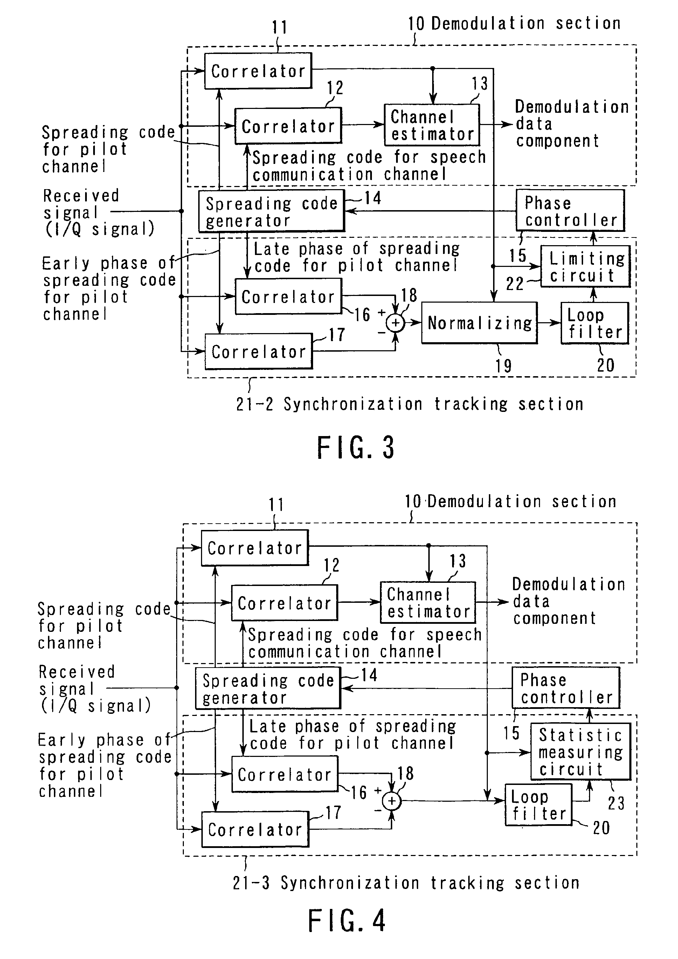

FIG. 3 is a diagram showing another example of a finger configuration according to the present embodiment. The present configuration is a configuration in which a limiting circuit 22 for phase control is added between the phase controller 15 and the loop filter 20 shown in FIG. 1. The limiting circuit 22 limits the control signal from the loop filter 20 in accordance with the on-time correlation value from the correlator 11. Concretely, the maximum phase width for control is changed in accordance with the on-time correlation value from the correlator 11.

Namely, when the on-time correlation value which is the output from the correlator 11 is small, it is assumed that the level of the received signal is small. The control signal generated from such a received signal has low reliability. Accordingly, when broad-width phase control is carried out in such a state, it may become a cause of step-out.

Here, in the present embodiment, a threshold value is set for the on-time correlation value from the correlator 11, and the method of phase control is changed in accordance with whether this on-time correlation value is greater than or less than this threshold value. When the on-time correlation value is greater than or equal to the threshold value, it assumes a state in which four-stage (±1/2, ±1/4 [chip]) phase control is carried out. At this time, if the on-time correlation value has become smaller than the threshold value, in order to prevent step-out due to great phase control (±1/2 [chip]), control is switched to two-stage phase control of ±1/4 [chip].

FIG. 4 is a diagram showing another example p of the configuration of the finger according to the present embodiment. This configuration is a configuration in which a statistic measuring circuit 23 for phase control is added between the phase controller 15 and the loop filter 20 shown in FIG. 1. The statistic measuring circuit 23 measures the statistics of the control signal from the loop filter 20, and varies the parameters (e.g., the time constant) of the loop filter 20 in accordance with the statistics.

For example, a state in which four-stage (±1/2, ±1/4 [chip]) phase control is carried out is assumed. In such a case, the phase control within a past, given time period is observed, and, for example, when the phase control of ±1/2 [chip] accounts for a given period of time or more, the time constant, i.e., the control interval, of the loop filter 20 is shortened in order to carry out fine control.

Next, a state in which two-stage (±1/4 [chip]) phase control is carried out is assumed. In such a case, the number of times that the output from the normalization circuit 19 exceeds a threshold value within a past, given time period is observed, and in accordance with the results of observation at this time, the time constant, i.e., the control interval, of the loop filter 20 may be changed.

As is clear from the above description, in accordance with the present embodiment, at the synchronization tracking section 21-1, the value of the difference between the early correlation value and the late correlation value is normalized by an on-time correlation value from the correlator 11. Thus, a phase control signal corresponding only to the phase shift can be generated. Thus, phase control which does not depend on the strength of the received signal can be realized.

Further, by providing a threshold value for a control signal which does not depend on the strength of the received signal and carrying out phase control in plural steps, high-speed tracking operation can be realized. Accordingly, high-speed tracking operation is possible even in a poor environment in which the frequency offset is great or when AFC having a poor holding characteristic is used.

Moreover, in the present embodiment, maximum phase control is limited in accordance with the magnitude of the on-time correlation value from the correlator 11. Due to such phase control, it is possible to suppress misoperation due to step-out.

Further, in the present embodiment, the interval of the phase control is changed in accordance with the statistics of the control signal from the loop filter 20. Thus, optimal control corresponding to various situations can be carried out.

To summarize, in accordance with the present invention, a synchronization tracking apparatus and a radio communication terminal, in which the synchronization tracking operation is not affected by the strength of the received signal, can be provided.

Moreover, in accordance with the present invention, a synchronization tracking apparatus and a radio communication terminal, in which the phase control width can be varied, the tracking ability is improved, and in which tracking is possible no matter what type of situation arises, can be provided.

## Claims

1. A synchronization tracking apparatus for a radio communication terminal which carries out radio communication with a base station, **characterized by** comprising:
a spreading code generator (14) which generates a spreading code having a predetermined phase;
a first correlator (11) which estimates a channel at a time of demodulation of a received signal by using a first spreading code outputted from the spreading code generator (14);
a second correlator (17) which carries out despreading by using a second spreading code which is outputted from the spreading code generator (14) and which has a phase earlier than the first spreading code by a constant amount;
a third correlator (16) which carries out despreading by using a third spreading code which is outputted from the spreading code generator (14) and which has a phase later than the first spreading code by a constant amount;
a subtracter (18) which calculates a difference value between a correlation value outputted from the second correlator (16) and a correlation value outputted from the third correlator (17); and
a normalizing circuit (19) which normalizes the difference value from the subtracter (18) on the basis of a correlation value outputted from the first correlator (11).

2. A synchronization tracking apparatus according to claim 1, **characterized by** further comprising a phase controller (15) which controls a phase of the spreading code generator (14), wherein the phase controller (15) varies a phase width at a time of phase control in accordance with an output from the normalizing circuit (19).

3. A synchronization tracking apparatus according to claim 2, **characterized by** further comprising a filter circuit (20) which carries out a predetermined filtering in response to the output from the normalizing circuit (19), and which generates a control signal to control the phase width and supplies the control signal to the phase controller (15).

4. A synchronization tracking apparatus according to claim 3, **characterized by** comprising a phase limiting circuit (22) which is provided between the phase controller (15) and the filter circuit (20), and which determines a maximum phase width at a time of controlling the phase of the spreading code generator (14) on the basis of the correlation value from the first correlator (11).

5. A synchronization tracking apparatus according to claim 3, **characterized by** further comprising a statistic measuring circuit (23) which is provided between the phase controller (15) and the filter circuit (20) and which measures statistics of the control signal from the filter circuit (20), wherein the filter circuit (20) generates a control signal corresponding to the statistics from the statistic measuring circuit (23).

6. A synchronization tracking apparatus for a radio communication terminal which carries out radio communication with a base station, **characterized by** comprising:
a spreading code generator (14) which generates a spreading code having a predetermined phase;
a first correlator (11) which estimates a channel at a time of demodulation of a received signal by using a first spreading code outputted from the spreading code generator (14);
a second correlator (17) which carries out despreading by using a second spreading code which is outputted from the spreading code generator (14) and which has a phase earlier than the first spreading code by a constant amount;
a third correlator (16) which carries out despreading by using a third spreading code which is outputted from the spreading code generator (14) and which has a phase later than the first spreading code by a constant amount;
a subtracter (18) which calculates a difference value between a correlation value outputted from the second correlator (17) and a correlation value outputted from the third correlator (16); and
a phase shift information acquiring section (19) which acquires information relating to a phase shift on the basis of a correlation value outputted from the first correlator (11) and the difference value from the subtracter (18).

7. A synchronization tracking apparatus according to claim 6, **characterized by** further comprising a phase controller (15) which controls a phase of the spreading code generator (14), wherein the phase controller (14) varies a phase width at a time of phase control in accordance with an output from the phase shift information acquiring section (19).

8. A synchronization tracking apparatus according to claim 7, **characterized by** further comprising a filter circuit (20) which carries out a predetermined filtering in response to the output from the phase shift information acquiring section (19), and which generates a control signal to control the phase width and supplies the control signal to the phase controller (15).

9. A synchronization tracking apparatus according to claim 8, **characterized by** comprising a phase limiting circuit (22) which is provided between the phase controller (15) and the filter circuit (20), and which determines a maximum phase width at a time of controlling the phase of the spreading code generator (14) on the basis of a correlation value from the first correlator (11).

10. A synchronization tracking apparatus according to claim 8, **characterized by** further comprising a statistic measuring circuit (23) which is provided between the phase controller (15) and the filter circuit (20), and which measures statistics of the control signal from the filter circuit (20), wherein the filter circuit (20) generates a control signal corresponding to the statistics from the statistic measuring circuit (23).

11. A radio communication terminal which carries out radio communication with a base station, **characterized by** comprising:
a spreading code generator (14) which generates a spreading code having a predetermined phase;
a first correlator (11) which estimates a channel at a time of demodulation of a received signal by using a first spreading code outputted from the spreading code generator (14);
a second correlator (17) which carries out despreading by using a second spreading code which is outputted from the spreading code generator (14) and which has a phase earlier than the first spreading code by a constant amount;
a third correlator (16) which carries out despreading by using a third spreading code which is outputted from the spreading code generator (14) and which has a phase later than the first spreading code by a constant amount;
a subtracter (18) which calculates a difference value between a correlation value outputted from the second correlator (17) and a correlation value outputted from the third correlator (16); and
a normalizing circuit (19) which normalizes the difference value from the subtracter (18) on the basis of a correlation value outputted from the first correlator (11).

12. A radio communication terminal according to claim 11, **characterized by** further comprising a phase controller (15) which controls a phase of the spreading code generator (14), wherein the phase controller (15) varies a phase width at a time of phase control in accordance with an output from the normalizing circuit (19).

13. A radio communication terminal according to claim 12, **characterized by** further comprising a filter circuit (20) which carries out a predetermined filtering in response to the output from the normalizing circuit (19), and which generates a control signal to control the phase width and supplies the control signal to the phase controller (15).

14. A radio communication terminal according to claim 13, **characterized by** comprising a phase limiting circuit (22) which is provided between the phase controller (15) and the filter circuit (20), and which determines a maximum phase width at a time of controlling the phase of the spreading code generator (14) on the basis of a correlation value from the first correlator (11).

15. A radio communication terminal according to claim 13, **characterized by** further comprising a statistic measuring circuit (23) which is provided between the phase controller (15) and the filter circuit (20), and which measures statistics of the control signal from the filter circuit (20), wherein the filter circuit (20) generates a control signal corresponding to the statistics from the statistic measuring circuit (23).

16. A radio communication terminal which carries out radio communication with a base station, **characterized by** comprising:
a spreading code generator (14) which generates a spreading code having a predetermined phase;
a first correlator (11) which estimates a channel at a time of demodulation of a received signal by using a first spreading code outputted from the spreading code generator (14);
a second correlator (17) which carries out despreading by using a second spreading code which is outputted from the spreading code generator (14) and which has a phase earlier than the first spreading code by a constant amount;
a third correlator (16) which carries out despreading by using a third spreading code which is outputted from the spreading code generator (14) and which has a phase later than the first spreading code by a constant amount;
a subtracter (18) which calculates a difference value between a correlation value outputted from the second correlator (17) and a correlation value outputted from the third correlator (16); and
a phase shift information acquiring section (19) which acquires information relating to a phase shift on the basis of a correlation value outputted from the first correlator (11) and the difference value from the subtracter (18).

17. A radio communication terminal according to claim 16, **characterized by** further comprising a phase controller (15) which controls a phase of the spreading code generator (14), wherein the phase controller (14) varies a phase width at a time of phase control in accordance with an output from the phase shift information acquiring section (19).

18. A radio communication terminal according to claim 17, **characterized by** further comprising a filter circuit (20) which carries out a predetermined filtering in response to the output from the phase shift information acquiring section (19), and which generates a control signal to control the phase width and supplies the control signal to the phase controller (15).

19. A radio communication terminal according to claim 18, **characterized by** comprising a phase limiting circuit (22) which is provided between the phase controller (15) and the filter circuit (20), and which determines a maximum phase width at a time of controlling the phase of the spreading code generator (14) on the basis of a correlation value from the first correlator (11).

20. A radio communication terminal according to claim 18, **characterized by** further comprising a statistic measuring circuit (23) which is provided between the phase controller (15) and the filter circuit (20), and which measures statistics of the control signal from the filter circuit (20), wherein the filter circuit (20) generates a control signal corresponding to the statistics from the statistic measuring circuit (23).
